# EUROPEAN PATENT APPLICATION

(11) **EP 3 398 852 A1**
(43) Date of publication of application: **07.11.2018**
(21) Application number: 17168884.9
(22) Date of filing: 01.05.2017
(51) Int. Cl.: B64C 39/00, B64C 1/00, B64C 23/06, B64C 29/02, B64C 29/04, B64D 17/80

(54) **METHOD AND DEVICE FOR CREATING A LIFTING FORCE ON A WING-DISC TRANSPORT APPARATUS**

(71) Applicant: Ecotech Engines AG, 7000 Chur (CH)
(72) Inventor: Noskov, Alexander Victorovich, 7000 Chur (CH); Ignatenko, Artem Pavlovich, 7000 Chur (CH)
(74) Representative: Bohest AG Branch Ostschweiz

(57) **Abstract**

There is described a method for creating a lifting force on a wing-disc transport apparatus, which transport apparatus comprises a generally lentiform structure (2) having a convexly shaped upper surface (3). The lentiform structure (2) further comprises a means (12, 13) for accelerating a fluid medium, which is taken in from the environment surrounding the wing-disc transport apparatus (1), and after acceleration is expelled through at least one outlet openings (8) into the surrounding environment. In accordance with the invention the accelerated fluid medium (100) is expelled through at least one outlet opening (8) which is positioned above the convex upper surface (8) of the lentiform structure (2), and is transported along the convex surface (3) in a vortex. There is also described a device for creating a lifting force on a wing-disc transport apparatus in accordance with the described method.

## Description

The current invention relates to a method for creating a lifting force on a wing-disc transport apparatus in accordance with the introductory clause of method claim 1. The current invention also relates to a device capable of creating a lifting force on a wing-disc transport apparatus in accordance with the introductory clause of the independent apparatus claim.

In view of the ever growing traffic on land various attempts have been made in the past to make use of the third spatial dimension and to provide proper transportation means for a transport of goods and/or people through the air. Besides conventional airplanes, which require special airfields for start and landing, which are both, cost-intensive and wasting space, various flight apparatuses have been proposed which are capable of starting and landing vertically, and which do not require large spaces and thus do not waste precious land. The main representatives of such vertically starting and landing flight apparatuses are helicopters which have been well proven in use. Helicopters, however, are relatively expensive, both in acquisition and in maintenance. They usually require specially trained pilots and they are not intended for an automated operation. In the past also alternative flight apparatuses have been proposed, which have a wing-disc shape and are of a generally lentiform structure. The flying capacities of these prior art flight apparatuses usually are based on reaction forces as a result of the propulsive thrust of one or more jet propulsion engines, which discharge hot gases towards the ground. In the past, unfortunately the handling and manoeuvring of such prior art flight apparatuses has proven difficult, and the flight capacities are only unsatisfactory.

It is therefore an object of the instant invention to provide a remedy to the deficiencies of these prior art wing-disc transport apparatuses. The solution shall not only refer to wing-disc flight apparatuses but shall generally be applicable with fluid media, such as, gases and liquids.

These and still further objects in the context with the above subject matter are met by a method and by a device for creating a lifting force on a wing-disc transport apparatus comprising the features listed in the respective independent method and apparatus claims.

Further improvements thereof and advantageous and preferred embodiments of the invention are subject of the dependent method and apparatus claims, respectively.

Thus, in accordance with the present invention a method for creating a lifting force on a wing-disc transport apparatus is proposed, which flight apparatus comprises a generally lentiform structure having a convexly shaped upper surface. The lentiform structure further comprises a means for accelerating a fluid medium, which is taken in from the environment surrounding the wing-disc transport apparatus, and after acceleration is expelled through at least one outlet opening into the surrounding environment. In accordance with the invention the accelerated fluid medium is expelled through at least one outlet opening which is arranged above the convex upper surface of the lentiform structure, and is transported along the convex surface in a vortex.

By guiding the fluid medium along the convex surface of the lentiform structure in a vortex the entrainment of further fluid medium from the surroundings is supported. The expelled fluid medium flows along the convex upper surface having a flow rate of about 80 m/s to about 200 m/s. The flow speed of the expelled fluid medium may reach up to 90 % of sonic speed. According to Bernoulli's law it follows that the created high-speed flow is accompanied by a pressure drop in the flowing fluid medium. As a consequence above the convex surface of the lentiform structure a region or regions of lower pressure develop. As a result a lifting force on an underneath surface of the lentiform structure of the wing-disc transport apparatus is developed. The magnitude of the lifting force depends on the velocity and pressure under which the accelerated fluid medium is expelled through the at least one outlet opening above the convex surface, and on the speed of the vortex along the convex surface.

In an exemplary embodiment of the invention the fluid medium may be expelled through a number of openings which are arranged annularly and approximately equiangularly around a vertical axis of the lentiform structure of the wing-disc transport apparatus. The annular and equiangular arrangement of the outlet openings about the vertical axis allows for a symmetrical expelling of the accelerated fluid medium if desired. This promotes the build-up of the vortex along the convex upper surface of the lentiform structure and supports a balanced lifting of the wing-disc transport apparatus. If desired, the expelling of the accelerated fluid medium can be controlled in a manner that in addition to the vertical lifting force an additional horizontal force may be created in order to advance the wing-disc transport apparatus into a desired direction.

In order to be able to be able to maneuver the wing-disc apparatus as desired, an exit angle, which the expelled accelerated fluid medium encloses with a radial direction at the outlet opening or openings, may be adjustable. In another exemplary embodiment of the invention the accelerated fluid medium, which is expelled through the outlet openings, may be adjustable in amount and direction at every single outlet opening. With this option a very high degree of maneuverability may be achieved. The maneuvring may be accomplished by hand or automatically. For an automatic control of the maneuvring the wing-disc transport apparatus may be equipped with gyroscopic means and GPS.

In another exemplary embodiment of the invention about 50 % to 90 % of the expelled accelerated fluid medium may be collected in an annular-toroidal channel which is arranged at a free circumferential end of the lentiform structure. The collected fluid medium may then be transported back to the accelerating means together with fluid medium which is taken in from the environment. By this measure the energy required for the acceleration of the fluid medium and for the creation of a vortex along the convex surface of the lentiform structure of the wing-disc transport apparatus may be reduced. Similar to the principles of energy savings in partially closed wind tunnels the energy required may be reduced up to a factor 5.

The fluid medium may be accelerated with rotating turbine blades or the like vane wheels of a propulsion engine. In order to compensate torque momentum arising from the rotating vane wheels of the acceleration means for the fluid medium, at least two vane wheels may be arranged coaxially, which are rotated in opposite directions. If it is desired to have the wing-disc transport apparatus rotate in a controlled manner about its vertical axis, the rotation speed of one of the vane wheels may be controlled in a manner that a resultant small torque momentum may be created. The fluid medium may be accelerated inside the lentiform structure in a direction, which extends about parallel to a vertical axis of the lentiform structure, and guided towards the outlet opening or openings.

In an exemplary embodiment of the invention air may be used as the fluid medium and consequently the transport apparatus is designed as a flight apparatus. In an alternative embodiment of the invention water may be used as the fluid medium. The transport apparatus then is designed as a submersible vehicle.

A device for creating a lifting force on a wing-disc transport apparatus according to the invention comprises a generally lentiform structure having a convexly shaped upper surface, and a means for accelerating a fluid medium, which is taken in from the environment surrounding the wing-disc transport apparatus. At least one outlet opening is arranged above the convex upper surface of the lentiform structure and is configured such, that the expelled accelerated fluid medium is transported along the convex surface in a vortex. The device according to the invention allows for carrying out the proposed method for creating a lifting force on the wing-disc transport apparatus, which has been explained in more detail hereinbefore. As mentioned before, the expelled accelerated medium follows the convex surface of the upper surface of the lentiform structure. A premature detachment of the accelerated fluid medium from the convex surface and consequently a stall may be avoided.

In an exemplary embodiment of the device according to the invention there are provided a number of outlet openings, which are about the same size and which may be arranged annularly and in an approximately equiangular arrangement around a vertical axis of the lentiform structure. The acceleration means for the fluid medium is positioned such along the vertical axis, that the fluid means is accelerated parallel to the vertical axis towards the outlet openings. In vicinity of the outlet openings the accelerated fluid medium may be deflected such that it is expelled through the annularly arranged outlet openings and is transported along the convex upper surface of the lentiform structure in a vertex.

At each outlet opening there may be arranged at least one deflecting flap or sheath which may be adjustable for achieving a desired expelling angle, which the accelerated fluid medium encloses with a radial direction at the outlet opening. In a further exemplary embodiment according to the invention at each outlet opening there may be arranged a control valve for regulating the volume and/or the direction of the expelled accelerated fluid medium. By regulating the expelling angle, the volume and the direction of the expelled accelerated fluid medium the build-up of the vortex along the convex upper surface of the lentiform structure of the wing-disc transport apparatus may be controlled. With such equipment the wing-disc apparatus may be maneuvered as desired. The maneuvering may be accomplished by hand or automatically. For an automatic control of the maneuvering the wing-disc transport apparatus may additionally be equipped with gyroscopic means and with GPS.

In another exemplary embodiment of the device according to the invention at a free circumferential end of the lentiform structure there may be arranged an annular-toroidal channel for collecting at least a portion of the expelled accelerated fluid medium streaming along the convex upper surface of the lentiform structure. The annular-toroidal channel is communicating with the accelerating means for the fluid medium via one or more ducts, and also communicates with the surrounding environment. Thus, the collected accelerated fluid medium may be mixed with new fluid medium entrained from the surroundings. The total volume of fluid medium per time unit may then be transported via the one or more ducts to the acceleration means. Collecting at least a portion of the accelerated fluid medium at the end of the convex surface in the annular-toroidal channel supports an energy saving for the operation of the acceleration means.

In an exemplary embodiment of the device according to the invention the accelerating means for the fluid medium is arranged inside the lentiform structure along a vertical axis thereof and comprises a turbine or like propulsion engine with rotatable blades or vane wheels. The turbine or propulsion engine or the like drive may comprise at least two vane wheels which may be rotated in opposite directions. This constructive measure allows for a compensation of a torque momentum arising from the rotating vane wheels. If it is desired to have the wing-disc transport apparatus rotate in a controlled manner about its vertical axis, the rotation speed of one of the vane wheels may be controlled in a manner that a resultant small torque momentum may be created.

The device according to the invention may comprise a turbine or propulsion engine or like drive which is configured for the acceleration of air. Consequently the wing-disc transport apparatus is configured as a flight apparatus. In an alternative embodiment of the invention the turbine or propulsion engine or like drive may be configured for the acceleration of water. The wing-disc transport apparatus is then designed as a submersible vehicle.

For a transport of people the lentiform structure may be connected with a transport cabin or more specifically a passenger cabin, having a vertical axis coinciding with a vertical axis of the lentiform structure, and protruding from an underneath side of the lentiform structure. All equipment for the creation of a lifting force is housed within the lentiform structure of the wing-disc transport apparatus. The passenger cabin may be equipped with electronic control instruments for a manual and/or automatic control of the apparatus. It should be noted though, that the transport cabin may also be used for the transport of goods.

For safety purposes the transport apparatus may be equipped with a rescue means, such as, e.g., a parachute, which may be arranged within a dome above the outlet opening or openings for the accelerated fluid medium.

Further details and advantages of the invention will become apparent from the following description of an exemplary embodiment thereof, reference being made to the schematic drawings, which are not to scale, in which:
- Fig. 1: shows a partly sectioned view of a wing-disc transport apparatus according to the invention; and
- Fig. 2: shows a depiction of the transport apparatus corresponding to Fig. 1 with symbolically indicated flow streamlines of the fluid medium.

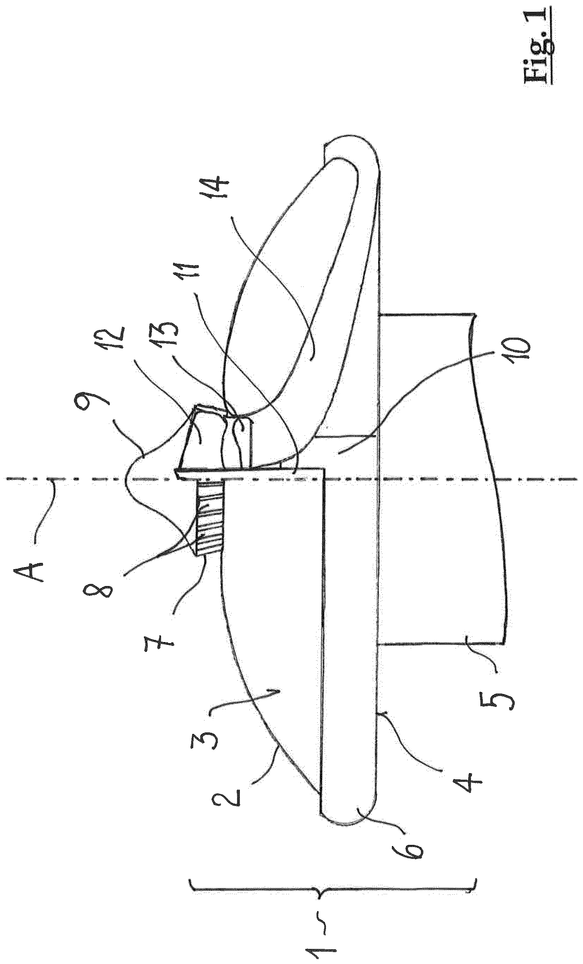

Fig. 1 shows schematically a wing-disc transport apparatus, more specifically a wing-disc flight apparatus, which is generally designated with reference numeral 1. The wing-disc flight apparatus 1 comprises lentiform structure 2 with a convex upper surface 3 and an underneath surface 4. A transport cabin, which is indicated at reference numeral 5, is connected to the lentiform structure 2 and protrudes from the underneath surface 4 thereof. The transport cabin 5 has a vertical axis which coincides with a vertical axis A of the lentiform structure 2. The transport cabin 5 may be equipped with landing gear or the like, which is not shown in Fig. 1. The transport cabin 5 may be fitted for the transport of one or more passengers, or it may be designed for the transport of goods only. The transport cabin 5 may be equipped with electronic control instruments for a manual and/or an automatic control of the wing-disc flight apparatus 1.

The lentiform structure 2 is of a light-weight construction and e.g. may be made of aluminium and/or of titanium and/or of carbon. The convexly shaped upper surface 3 and the underneath surface 4 may be made of a light-weight metal, such as aluminium, or may consist of or comprise fibre reinforced plastic. The convexly shaped upper surface 3 and the underneath surface 4 are separated by an annular-toroidal channel 6 which is arranged at the circumference of a free end of the lentiform structure 2. The annular-toroidal channel 6 is open towards the convexly shaped upper surface 3.

The lentiform structure 2 vertically is surmounted by a central housing 7 which is located centrally of the convex upper surface 3 and which axially coincides with the axis A of the lentiform structure 2. The central housing 7 is provided with one or more outlet openings 8. In the depicted embodiment there are provided a number of outlet openings 8, which have about the same shape and which are arranged annularly and approximately equiangularly around the vertical axis A of the lentiform structure of the wing-disc transport apparatus. A dome 9 on top of the central housing 7 may house a rescue means, such as, e.g., a parachute or the like (not shown).

Inside the lentiform structure 2 there is arranged a turbine 10, a propulsion engine, or the like. A shaft 11 of the turbine 10 bears at least two rotatable blades or vane wheels 12, 13, which may be rotated in opposite directions. The blades or vane wheels 12, 13 are located about coaxially with the vertical axis A of the lentiform structure 2. One or more ducts 14 provide a communication in between the annular channel-toroidal 6 and the rotatable blades or vane wheels 12, 13. A reservoir for fuel (not shown) for operation of the turbine 10 or propulsion engine or the like drive for the rotatable blades or vane wheels 12, 13 may also be housed within the lentiform structure 2.

In operation the turbine with the rotatable blades or vane wheels 12, 13 accelerates a fluid medium, which in case of the depicted embodiment of a wing-disc flying apparatus 1 is air, in a direction which is about parallel to the vertical axis A of the lentiform structure 2. The air may be sucked in via the annular-toroidal channel 6, which is open towards the convexly shaped upper surface 3, and returned to the rotatable blades or vane wheels 12, 13 for a new acceleration. The accelerated air then is deflected and expelled through the outlet openings 8 of the central housing 7 such, that it is transported along the convex upper surface 3 of the lentiform structure 2 in a vortex.

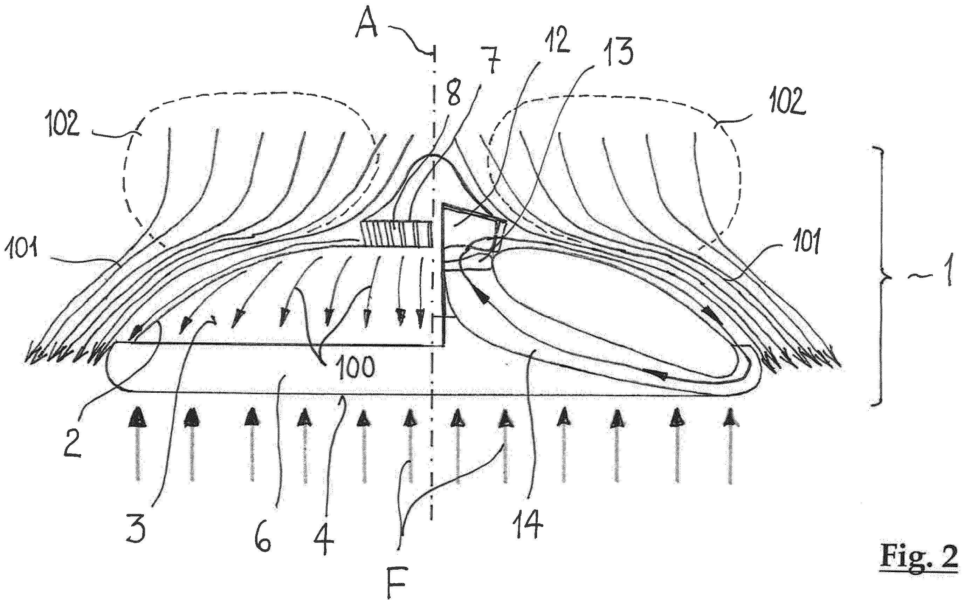

Fig. 2 schematically shows the air flow along the lentiform structure 2 of the wing-disc flying apparatus 1 during operation thereof. The drawing corresponds to that of Fig. 1; for the sake of clarity the transport cabin (reference numeral 5 in Fig. 1) has been omitted. Air which has been accelerated within the lentiform structure 2 is expelled through the outlet openings 8 of the central housing 7 towards the convex upper surface 3 of the lentiform structure 2. In Fig. 2 the expelled air is designated with reference numeral 100. Due to the Bernoulli's law the expelled air 100 stays attached to the convex surface 3. The high velocity of the expelled air, which may reach up to 90% of sonic speed, and the created vortex results in an entrainment of air 101 from the surroundings. As a consequence above the convex upper surface 3 of the lentiform structure 2 a region or regions of lower pressure 102 develop. As a result a lifting force F on the underneath surface 4 of the lentiform structure 2 of the wing-disc flight apparatus 1 is developed. The magnitude of the lifting force F. depends on the velocity and pressure under which the accelerated air is expelled through the openings 8 in the central housing 7 above the convex upper surface 8, and on the speed of the vortex along the convex upper surface 8.

About 50 % to 90 % of the expelled accelerated air 100 may be collected in the annular channel-toroidal 6 which is arranged at the free circumferential end of the lentiform structure 2. The collected air 100 may then be transported back to the rotating blades or vane wheels 12, 13 together with fresh air which is taken in from the environment via duct(s) 14. By this measure the energy required for the acceleration of the air and for the creation of a vortex along the convex upper surface 3 of the lentiform structure 2 of the wing-disc flight apparatus 1 may be reduced up to five times according to the principle of energy saving in partially closed wind tunnels. The volume of the accelerated and expelled air depends on the diameter of the rotatable blades or vane wheels 12, 13 and the diameter of the wing-disc, as well as on the power of the turbine or propulsion engine.

At each outlet opening 8 there may be arranged at least one deflecting flap or sheath (not shown) which may be adjustable for achieving a desired expelling angle, which the accelerated air encloses with a radial direction at the outlet opening 8. In addition or alternatively to this constructive detail at each outlet opening 8 there may be arranged a control valve (not shown) for regulating the volume and/or the direction of the expelled accelerated air. By regulating the expelling angle, the volume and the direction of the expelled air the build-up of the vortex along the convex upper surface 3 of the lentiform structure 2 of the wing-disc flying apparatus 1 may be controlled. With such provisions the wing-disc flying apparatus 1 may be maneuvered as desired. The maneuvering may be accomplished by hand or automatically. For an automatic control of the maneuvering the wing-disc flying apparatus may additionally be equipped with gyroscopic means and with GPS.

Although the invention has been described with the reference to a specific embodiment, it is evident to the person skilled in the art that this embodiment stands only by way of example for the general inventive concept, and that various changes and modifications are conceivable without departing from the teaching underlying the invention. Thus, for example, instead of air, water may be used as the fluid medium. The wing-disc transport apparatus then may be designed as a submersible vehicle. Therefore, the invention is not intended to be limited by the embodiment described, but rather is defined by the appended claims.

## Claims

1. Method for creating a lifting force on a wing-disc transport apparatus, which transport apparatus (1) comprises a generally lentiform structure (2) having a convexly shaped upper surface (3), and further comprising a means (10, 11, 12, 13) for accelerating a fluid medium, which is taken in from the environment surrounding the wing-disc transport apparatus (1), and after acceleration is expelled through at least one outlet opening into the surrounding environment, **characterized in that** the accelerated fluid medium (100) is expelled through at least one outlet opening (8) which is arranged above the convex upper surface (3) of the lentiform structure (2), and is transported along the convex upper surface (3) in a vortex.

2. Method according to claim 1, wherein the fluid medium is expelled through a number of outlet openings (8) which have about the same shape and which are arranged annularly and in an approximately equiangular arrangement around a vertical axis (A) of the lentiform structure (2).

3. Method according to claim 1 or 2, wherein an exit angle, which the expelled accelerated fluid medium encloses with a radial direction at the outlet opening or openings (8), is adjustable.

4. Method according to one of the preceding claims, wherein the accelerated fluid medium, which is expelled through the outlet opening or openings (8), is adjustable in amount and direction at every single outlet opening (8).

5. Method according to one of the preceding claims, wherein 50 % to 90 % of the expelled accelerated fluid medium is collected in an annular-toroidal channel (6) which is arranged at a free circumferential end of the lentiform structure (2), and then is transported back to the accelerating means (10, 11, 12, 13) together with fluid medium which is taken in from the environment.

6. Method according to one of the preceding claims, wherein the fluid medium is accelerated with rotating turbine blades or the like vane wheels (12, 13).

7. Method according to claim 6, wherein the fluid medium is accelerated in a direction extending about parallel to a vertical axis (A) of the lentiform structure (2) towards the outlet opening or openings (8).

8. Method according to any one of the preceding claims, wherein as the fluid medium air is used and the transport apparatus is designed as a flight apparatus.

9. Method according to any one of claims 1 to 8, wherein as the fluid medium water is used and the transport apparatus is designed as a submersible vehicle.

10. Device for creating a lifting force on a wing-disc transport apparatus comprising a generally lentiform structure (2) having a convexly shaped upper surface (3), and a means (10, 11, 12, 13) for accelerating a fluid medium, which is taken in from the environment surrounding of the wing-disc transport apparatus (1), and after acceleration is expelled through at least one outlet opening (8) into the surrounding environment, **characterized in that** the at least one outlet opening (8) is arranged above the convex upper surface (3) of the lentiform structure (2) and is configured such, that the expelled accelerated fluid medium (100) is transported along the convex surface (3) in a vortex.

11. Device according to claim 10, wherein there are provided a number of outlet openings (8) which have about the same shape and which are arranged annularly and in an approximately equiangular arrangement around a vertical axis (A) of the lentiform structure (2).

12. Device according to claim 10 or 11, wherein at each outlet opening (8) there is arranged at least one deflecting flap or sheath which may be adjustable for achieving a desired expelling angle, which the accelerated fluid medium (100) encloses with a radial direction at the outlet opening (8).

13. Device according to one of claims 10 to 12, wherein at each outlet opening (8) there is arranged a control valve for regulating the volume and/or the direction of the expelled accelerated fluid medium (100).

14. Device according to one of claims 10 to 13, wherein at a free circumferential end of the lentiform structure there is arranged an annular-toroidal channel (6) for collecting at least a portion of the expelled accelerated fluid medium (100) streaming along the convex upper surface (3) of the lentiform structure (2), which annular-toroidal channel (6) via one or more ducts (14) is communicating with the accelerating means (10, 11, 12, 13) for the fluid medium.

15. Device according to one of claims 10 to 14, wherein the accelerating means (10, 11, 12, 13) for the fluid medium is arranged inside the lentiform structure (2) along a vertical axis (A) thereof and comprises a turbine or propulsion engine or like drive with rotatable blades or vane wheels (12, 13).

16. Device according to claim 15, wherein the turbine or propulsion engine or like drive comprises at least two vane wheels (12, 13) which are rotatable in opposite directions.

17. Device according to claim 16, wherein the turbine or propulsion engine or like drive is configured for the acceleration of air.

18. Device according to claim 16, wherein the turbine or propulsion engine or like drive is configured for the acceleration of water.

19. Device according to one of claims 10 to 18, wherein the lentiform structure (2) is connected with a transport cabin (5), having a vertical axis coinciding with a vertical axis (A) of the lentiform structure (2), and which protrudes from an underneath side (4) of the lentiform structure (2).

20. Device according to claim 19, wherein there is provided a rescue means such as, e.g., a parachute, which is arranged with in a dome (9) above the outlet opening or openings (8) for the accelerated fluid medium.
